# DEMANDE DE BREVET EUROPEEN

(11) **EP 1 965 353 A2**
(43) Date de publication de la demande: **03.09.2008**
(21) Numéro de dépôt: 08151343.4
(22) Date de dépôt: 13.02.2008
(51) Int. Cl.: G06T 7/20, B60Q 1/08

(54) **Procédé de détection d'un virage, procédé de commande de l'éclairage d'un véhicule lors de la détection d'un virage et système de mise en oeuvre de ces procédés**

(30) Priorité: 28.02.2007 FR 0701460
(71) Demandeur: VALEO VISION, 93000 Bobigny (FR)
(72) Inventeur: Reilhac, Patrice, 73732, ESSLINGEN (DE); Hue, David, 78400, CHATOU (FR); Leleve, Joël, 93800, EPINAY SUR SEINE (FR)

(57) **Abrégé**

L'invention concerne un procédé de détection d'un virage depuis un véhicule, comportant les étapes suivantes :
- prise d'une première image (11) d'une scène de route se déroulant à l'avant du véhicule,
- prise d'une seconde image (12) de la scène de route, successive à la première image,
- détermination d'un premier vecteur vitesse (V1) correspondant à un déplacement d'un premier point (P1) de la première image vers la seconde image,
- détermination d'un second vecteur vitesse (V2) correspondant à un déplacement d'un second point (P2) de la première image vers la seconde image,
- comparaison entre le premier vecteur vitesse et le second vecteur vitesse et obtention d'un résultat de comparaison,
- déduction de l'existence d'un virage et d'un sens de ce virage en fonction du résultat de comparaison.

L'invention concerne également un procédé de commande de l'intensité lumineuse des projecteurs et un système pour mettre en oeuvre ces procédés.

## Description

### Domaine de l'invention

L'invention concerne un procédé pour détecter un virage sur une route sur laquelle avance un véhicule. La détection du virage est réalisée à partir d'images de la scène de route située à l'avant du véhicule. L'invention concerne également un procédé pour commander le système d'éclairage du véhicule lorsqu'un virage a été détecté. L'invention concerne, en outre, un système pour mettre en oeuvre ces procédés.

L'invention trouve des applications dans le domaine des véhicules circulant sur route, comme par exemple les véhicules automobiles ou les véhicules poids lourds. Elle trouve, en particulier, des applications dans le domaine de l'éclairage de ces véhicules.

### Etat de la technique

Compte tenu du nombre important de véhicules circulant sur les routes, il est nécessaire de procurer à ces véhicules un éclairage le mieux adapté possible afin de réduire les risques d'accidents. En particulier la nuit, il est important que le conducteur puisse avoir une vision optimale de la route qui s'étend devant lui. Autrement dit, pour des questions de sécurité, on cherche à améliorer l'éclairage de la route située devant le véhicule et, ainsi, à améliorer la vision de la scène de route par le conducteur du véhicule. Cette amélioration passe, notamment, par une anticipation de l'éclairage de la route.

Classiquement, les faisceaux d'éclairage du véhicule sont fixes. Ils éclairent donc à l'avant du véhicule. De ce fait, dans les virages, la partie utile de la route n'apparaît pas forcément dans le faisceau lumineux du véhicule. Pour résoudre ce problème, on cherche à orienter la lumière émise par les projecteurs du véhicule en fonction de la géométrie de la route. Autrement dit, on cherche à ce que les projecteurs «suivent » la route, c'est-à-dire qu'ils éclairent droit devant le véhicule lorsque la route est rectiligne et qu'ils éclairent, à l'avant du véhicule, sur la droite ou sur la gauche lorsque la route forme un virage, respectivement, à droite ou à gauche. Les projecteurs remplissent ainsi ce qu'il est convenu d'appeler une fonction virage. Ils peuvent être fixes par rapport au véhicule, orientés obliquement par rapport à l'axe longitudinal du véhicule, et ne s'allumer qu'à l'approche d'un virage, ou dans le virage lui-même.

Il existe également des projecteurs de lumière dans lesquels le faisceau lumineux principal est rendu mobile mécaniquement, grâce à un moteur qui tourne en fonction d'une information provenant du véhicule. Des dispositifs d'éclairage comportant de tels projecteurs mobiles permettent à l'éclairage de suivre la route. Généralement, ces dispositifs utilisent des informations disponibles sur le véhicule pour déterminer la géométrie de la route. Ces informations peuvent être fournies par différents moyens montés sur le véhicule. Ces moyens peuvent être, par exemple, un capteur d'angle au volant qui fournit des informations sur la trajectoire suivie par le véhicule.

Avec un tel dispositif, l'éclairage de la route n'est fonction que du comportement du véhicule. Par exemple, si le conducteur tourne le volant du véhicule vers la droite, alors les projecteurs du véhicule sont dirigés vers la droite de la route en considérant qu'il s'agit d'un virage à droite. Si le conducteur ne bouge pas le volant, les projecteurs éclairent droit devant le véhicule. Par contre, si le conducteur donne malencontreusement une impulsion au volant, par exemple en se retournant un instant ou en sortant un objet de la boîte à gants, l'orientation des projecteurs est modifiée alors que la géométrie de la route n'est pas modifiée. Un tel dispositif d'éclairage n'offre donc aucune possibilité d'anticipation pour le conducteur, puisque l'éclairage est modifié en fonction des impulsions données au volant.

D'autres dispositifs d'éclairage connus utilisent des informations issues d'un système de navigation. Le système de navigation associe les informations fournies par une cartographie avec les indications données par le GPS du véhicule. Un tel système de navigation permet d'anticiper les virages sur la route. Par contre, la cartographie actuelle est encore très imprécise, en particulier dans certaines zones du monde. Il peut donc arriver qu'à un endroit donné l'information soit absente. En outre, un tel dispositif d'éclairage nécessite des moyens lourds et, par conséquent, coûteux.

Il existe également une technique permettant de détecter les virages, avec anticipation, en utilisant les contrastes qu'il peut y avoir entre la voie de circulation de la route, relativement sombre, et les bords de la route, plus lumineux. Un tel procédé est décrit notamment dans la demande de brevet EP - 1 431 918 - B1. Cependant, ce procédé nécessite de nombreux calculs. Il nécessite donc des moyens de calculs dédiés, relativement lourds à mettre en place.

Toutes les techniques évoquées précédemment sont des techniques qui présentent l'inconvénient d'être relativement lourdes à mettre en oeuvre. Ces techniques nécessitent de connaître des informations, telles que l'information d'angle au volant, qui sont généralement des informations capturées par un dispositif monté sur le véhicule et transmises à un dispositif de commande des projecteurs par câblage, par exemple par un bus CAN (Controller Area network, en termes anglosaxons). Cependant, pour accéder à des informations sur un tel bus CAN, il faut connaître les codes de messagerie du réseau CAN pour en extraire les informations. Or, ces codes sont confidentiels ; ils sont la propriété des constructeurs automobiles et ne peuvent donc être connus des particuliers. De plus, l'accessibilité à ces informations nécessite une intervention physique sur le faisceau de ce bus, ce qui est pratiquement impossible pour un particulier et source d'insécurité potentielle. En conséquence, de telles techniques sont efficaces lorsqu'elles sont prévues pour être mises en oeuvre sur une chaîne de production, lors de la fabrication du véhicule. Par contre, il ne peut être envisageable de mettre en oeuvre ces techniques en post-équipement, sur des systèmes dits «en kit » c'est-à-dire des systèmes prêts-à-monter, vendus en magasin et destinés à pouvoir être montés sur le véhicule par un particulier.

Il existe, par ailleurs, un système de détection de virages en prêt-à-monter. Ce système de détection de virages utilise une centrale à inertie et des accéléromètres latéraux, sensibles à la rotation du véhicule. Un tel système est décrit notamment dans la demande de brevet n° EP 1 354 761. Si ce système est sensible à la rotation du véhicule, il est aussi sensible à toutes les accélérations brusques du véhicule et donc également aux accélérations latérales, même en ligne droite, du véhicule. En conséquence, si le conducteur du véhicule donne un violent coup de volant, un virage peut être détecté alors même que la route est droite.

### Exposé de l'invention

L'invention a justement pour but de remédier aux inconvénients des techniques exposées précédemment. Pour cela, l'invention propose un procédé pour détecter un virage, simple à mettre en oeuvre, pouvant être intégré dans un système en kit. Ce procédé utilise un matériel d'origine, c'est-à-dire au moins en partie monté sur le véhicule lors de sa fabrication, ou un matériel vendu en kit et destiné initialement à la vision de nuit ou au suivi de lignes blanches (line departure warning, en termes anglo-saxons). Ce procédé utilise, en particulier, des éléments qui sont nécessaires à vision de nuit (Night Vision, en termes anglo-saxons), tels que des projecteurs commandés électroniquement, une caméra infrarouge, et un dispositif de commande des projecteurs, éventuellement associé à un écran de visualisation.

De façon plus précise, l'invention concerne un procédé de détection d'un virage depuis un véhicule, comportant une étape de prise d'une première image d'une scène de route se déroulant à l'avant du véhicule, caractérisé en ce qu'il comporte les étapes suivantes :
- prise d'une seconde image de la scène de route, successive à la première image,
- détermination d'un premier vecteur vitesse correspondant à un déplacement d'un premier point de la première image vers la seconde image,
- détermination d'un second vecteur vitesse correspondant à un déplacement d'un second point de la première image vers la seconde image,
- comparaison entre le premier vecteur vitesse et le second vecteur vitesse et obtention d'un résultat de comparaison,
- déduction de l'existence d'un virage et d'un sens de ce virage en fonction du résultat de comparaison.

Ce procédé peut comporter une ou plusieurs des caractéristiques suivantes :
- La détermination du premier vecteur vitesse comporte une recherche et une localisation, dans la première image, d'un premier point caractéristique, une recherche et une localisation de ce premier point caractéristique, dans la seconde image, et une détermination du déplacement du premier point caractéristique entre la première et la seconde images.
- La détermination du second vecteur vitesse comporte une recherche et une localisation, dans la première image, d'un second point caractéristique, une recherche et une localisation de ce second point caractéristique, dans la seconde image, et une détermination du déplacement du second point caractéristique entre la première et la seconde images.
- Le premier et le second points caractéristiques sont recherchés dans des zones latérales des images.
- Le premier point caractéristique est recherché sur la gauche de l'image et le second point caractéristique est recherché sur la droite de l'image.
- La comparaison entre le premier et le second vecteurs vitesse comporte une opération de soustraction V1 - V2, un résultat positif de cette opération indiquant un virage à droite, un résultat négatif de cette opération indiquant un virage à gauche.

L'invention concerne également un procédé de commande d'une intensité d'éclairage d'un ensemble de projecteurs d'un véhicule, caractérisé en ce qu'il comporte les étapes suivantes :
- détermination d'un sens d'un virage selon l'une quelconque des revendications précédentes,
- détermination d'une amplitude du virage à partir du résultat de comparaison des deux vecteurs vitesse,
- application d'une tension de commande d'une fonction virage aux bornes des projecteurs en fonction du sens et de l'amplitude du virage.

L'invention concerne aussi un système de détection d'un virage pour véhicule automobile, caractérisé en ce qu'il comporte un kit de vision de nuit ou de détection de lignes blanches, comprenant :
- au moins une source infra rouge pour éclairer une scène de route située à l'avant du véhicule,
- une caméra de prise d'images de la scène de route, et
- un dispositif de commande pour appliquer, à des projecteurs du véhicule, une intensité lumineuse fonction d'une analyse des images de la scène de route, ce dispositif de commande étant apte à déterminer, à partir des images de la scène de route, un sens et une amplitude du virage.

Le système selon l'invention peut comporter une ou plusieurs des caractéristiques suivantes :
Le kit de vision de nuit ou de détection de lignes blanches comporte des projecteurs intégrant au moins une source infrarouge.
Les sources infrarouges sont des lampes à filaments ou des diodes électroluminescentes.

L'invention concerne en outre un véhicule comportant un ensemble de projecteurs lumineux et équipé du système tel que décrit précédemment

### Brève description des dessins

La figure 1 représente schématiquement les différents éléments du système de l'invention.
La figure 2 représente un premier exemple d'images à partir desquelles est appliqué le procédé selon l'invention.
La figure 3 représente un second exemple d'images à partir desquelles est appliqué le procédé selon l'invention.

### Description détaillée de modes de réalisation de l'invention

L'invention concerne un procédé pour détecter un virage à partir d'un système pouvant être facilement installé dans véhicule, ou installé initialement dans le véhicule, pour réaliser une fonction de vision de nuit ou de détection de ligne blanche. En particulier, le procédé de l'invention peut être mis en oeuvre au moyen d'un système de vision de nuit disponible en kit post-équipement, c'est-à-dire vendu en grandes surfaces ou dans des magasins spécialisés et pouvant être installé sur le véhicule par un particulier. Un tel système doit donc être simple à installer afin que le conducteur, ou tout autre particulier, puisse l'installer sur le véhicule sans avoir recours à un spécialiste.

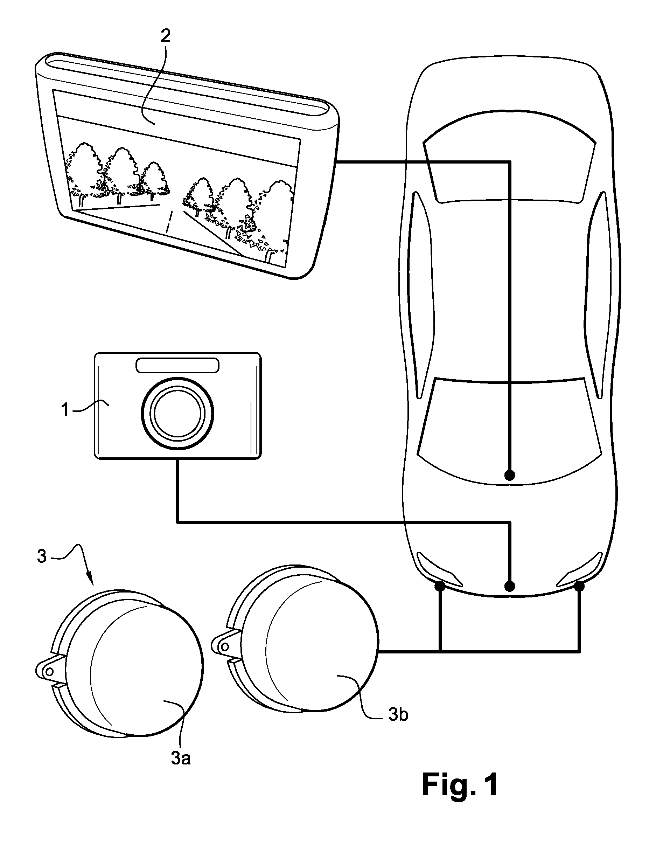

La figure 1 représente un exemple de système de détection de virages selon l'invention. Plus précisément, ce système comporte un dispositif de prise d'images 1, appelé caméra, apte à réaliser des images, de nuit, de la scène de route située à l'avant du véhicule. Dans le système de l'invention, la caméra 1 est installée de préférence à l'avant du véhicule, comme montré sur la figure 1, ou derrière le pare-brise à proximité du rétroviseur central.

Le système de l'invention comporte aussi un dispositif de commande des projecteurs 2. Ce dispositif de commande 2 comprend une unité de traitement vidéo assurant une analyse des images fournies par la caméra. Cette unité de traitement vidéo met en oeuvre le procédé de détection de virages de l'invention, qui sera décrit ultérieurement. Le dispositif de commande 2 comporte de plus une unité de gestion de l'éclairage. Comme cela sera décrit plus en détails par la suite, cette unité de gestion de l'éclairage commande l'intensité lumineuse émise par chaque projecteur de virage ou antibrouillard en fonction des informations déterminées par l'unité de traitement. Dans un mode de réalisation préféré de l'invention, le dispositif de commande 2 peut comporter aussi un écran de visualisation permettant au conducteur de visualiser la scène de route prise en image par la caméra 1. Dans l'exemple de la figure 1, l'unité de traitement vidéo, l'unité de commande des projecteurs et l'écran de visualisation sont intégrés dans un seul et même boîtier, référencé 2. Ils peuvent également être indépendants pour les fonctions de virage qui ne nécessitent pas d'écran de visualisation.

Le système de l'invention comporte également au moins une lampe infrarouge pour éclairer la scène de route. Dans le mode de réalisation préféré de l'invention, représenté sur la figure 1, la lampe infrarouge est intégrée dans un projecteur. Les projecteurs 3a et 3b sont des projecteurs bi-fonction, c'est-à-dire des projecteurs qui émettent :
- soit de la lumière infrarouge pour éclairer la scène de route et ainsi permettre la mise en oeuvre d'un procédé de vision de nuit,
- soit de la lumière visible avec une distribution d'antibrouillard pour permettre une fonction antibrouillard.

Dans le cas d'un système en kit, la caméra 1 et le dispositif de commande 2 peuvent être installés sur le véhicule facilement. Les projecteurs bifonction peuvent être installés à la place des feux antibrouillard classiques.

Dans le système qui vient d'être décrit, l'unité de traitement vidéo assure un traitement des images réalisées par la caméra pour détecter un virage. Ce traitement consiste en une comparaison de deux images successives de la scène de route.

Plus précisément, le procédé de l'invention propose de réaliser une première image de la scène de route se déroulant devant le véhicule puis une seconde image de cette scène de route. Les deux images sont réalisées successivement. Dans la suite de la description, on considérera que la première image est l'image réalisée dans un premier temps et la seconde image est l'image réalisée dans un second temps, quelques instants après la première image.

Lorsque ces deux images ont été réalisées, le procédé propose de rechercher et de localiser dans la première image, au moins deux points caractéristiques de cette image. Ces points caractéristiques sont choisis, de préférence, dans les zones latérales de l'image, à proximité des bords gauche et droit de l'image. Ils sont éloignés latéralement du centre de l'image. Le premier point caractéristique est relevé, par exemple, sur la gauche de l'image ; le second point caractéristique est relevé, par exemple, sur la droite de l'image.

Le procédé propose ensuite de déterminer le déplacement de ces deux points caractéristiques. Pour cela, on recherche et on localise, dans la seconde image, le premier et le second points caractéristiques. Une fois que ce premier et ce second points ont été localisés, on détermine le vecteur vitesse correspondant au déplacement de chacun de ces points. Un premier vecteur vitesse V1 correspond donc au déplacement du premier point de la première image vers la seconde image. Un second vecteur vitesse V2 correspond au déplacement du second point caractéristique, de la première image vers la seconde image.

Lorsque les deux vecteurs vitesse V1 et V2 ont été déterminés, le procédé propose de les comparer l'un avec l'autre afin de déterminer si leur différence est positive ou négative. Le vecteur le plus grand indique le sens de rotation du véhicule, c'est-à-dire le sens du virage (vers la droite ou vers la gauche). De façon plus précise, on effectue le calcul suivant : V1 - V2.
- Si V1-V2 > 0 alors on considère que le virage est dirigé dans le sens du vecteur V1. Autrement dit, si on considère que le premier point caractéristique est le point situé sur la gauche de l'image, V1 est alors le vecteur vitesse du point gauche de l'image. Donc, si V1 est supérieur à V2, alors le virage est dirigé vers la droite de la route.
- Si V1-V2 < 0 alors on considère que le virage est dirigé dans le sens du vecteur V2. Autrement dit, si on considère que le second point caractéristique est le point situé sur la droite de l'image, V1 est alors le vecteur vitesse du point gauche de la route.
- Si V1=V2, cela signifie qu'il n'y a pas de virage et que le véhicule va continuer à rouler tout droit.

En effet, si le véhicule se déplace en ligne droite, les points caractéristiques s'écartent du centre vers l'extérieur de l'image et leurs vecteurs vitesse sont en sens opposés. Par contre, si le véhicule est dans un virage, les points caractéristiques se déplacent à des vitesses différentes et la somme vectorielle des vecteurs vitesse porte l'information virage.

Ainsi, avec le procédé de l'invention, on détecte la présence d'un virage dès que V1-V2 n'est pas nul. Le sens du virage détecté (vers la droite ou vers la gauche) est donné par le signe de la comparaison entre V1 et V2. La valeur de la différence V1-V2 en relation avec la vitesse propre du véhicule donne l'amplitude du virage

Dans l'invention, les points caractéristiques, appelés également coins, sont des points singuliers relevés sur l'image. Ces points singuliers sont des points plus lumineux que l'ensemble de l'image. Ils peuvent correspondre, par exemple, à un panneau ou à un poteau ou à tout autre élément qui réfléchit la lumière plus intensément que l'ensemble des éléments de l'image.

Plusieurs points caractéristiques peuvent être relevés dans une même image puis analysés afin d'augmenter le degré de confiance de la détermination. Toutefois, il est à noter que la recherche et la localisation de plusieurs points caractéristiques sur la première image entraîne nécessairement une recherche et une détermination de chacun de ces points sur la seconde image, ce qui augmente la quantité de calculs nécessaire à la détection d'un virage et, par conséquent, diminue la vitesse d'exécution du traitement.

Dans le mode de réalisation préféré de l'invention, on considère que deux points caractéristiques sont suffisants dès lors que l'un des points est situé vers le bord gauche de l'image et l'autre point vers le bord droit de l'image. En effet, les points situés au centre de l'image auront un déplacement nettement moindre que ceux situés sur les extrémités de l'image, ce qui donnera un résultat moins précis.

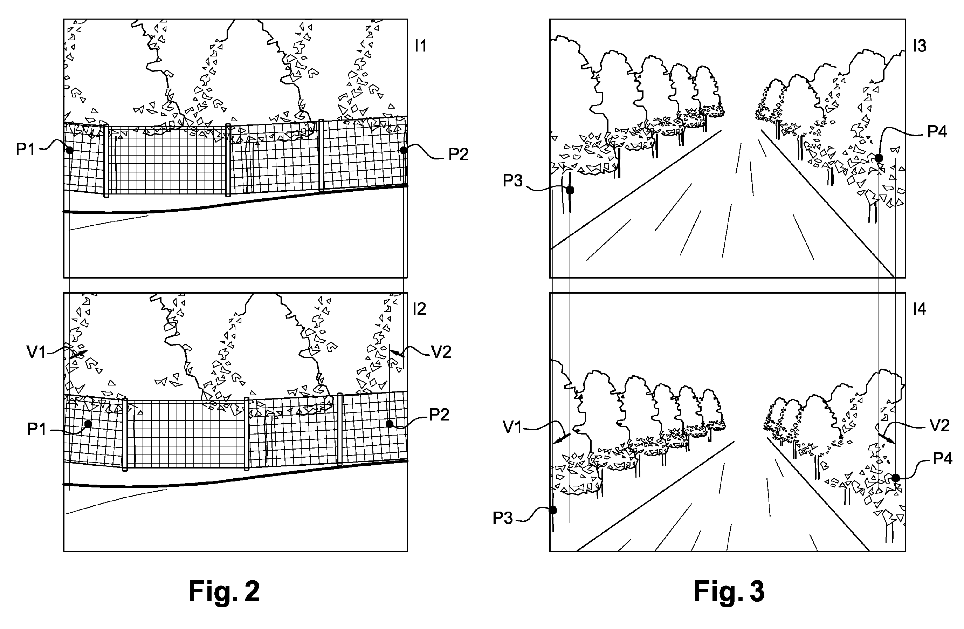

Sur la figure 2, on a représenté un premier exemple d'images permettant d'appliquer le procédé de l'invention. La première image I1 montre une scène de route comportant une portion de route, des poteaux et une clôture grillagée. On choisit, sur cette image I1, un premier point caractéristique P1 sur la gauche de la première image. Ce point caractéristique correspond à un poteau. On localise la position de ce point dans l'image. On choisit, ensuite, un second point caractéristique P2 sur la droite de l'image I1 et on le localise. Ce second point caractéristique P2 correspond également à un poteau. On recherche ensuite, dans la seconde image 12, les points caractéristiques P1 et P2. Lorsque ces deux points ont été trouvés, on les localise afin de connaître leurs coordonnées dans la seconde image 12. La localisation des points caractéristiques résulte d'une analyse de gradients selon les axes verticaux et horizontaux de l'image. Des variations fortes de gradients selon ces deux axes révèlent une aspérité, un angle, un repère facilement traçable d'image en image.

A partir de ces points caractéristiques, on détermine un premier vecteur vitesse V1 qui correspond au déplacement du premier point entre l'image I1 et l'image I2. On voit que le premier point s'est déplacé vers la droite, dans l'image I2, formant un vecteur vitesse V1 dirigé vers la droite de l'image. On détermine, de la même façon, un second vecteur vitesse V2 qui correspond au déplacement du second point entre l'image 11 et l'image 12. On voit que le second point s'est déplacé vers la gauche de l'image 12, formant un vecteur vitesse V2 dirigé vers la gauche de l'image. On voit, dans cet exemple, que le vecteur V1 est plus grand que le vecteur V2, on comprend donc que la comparaison V1-V2 est supérieure à 0, ce qui correspond à un virage dans le sens de V1, c'est-à-dire vers la droite.

La valeur V1-V2 permet de déterminer l'amplitude du virage. L'amplitude du virage correspond au rayon de courbure du virage, c'est-à-dire à l'angle de rotation que doit prendre le véhicule pour suivre le virage.

Sur la figure 3, on a représenté un deuxième exemple d'images permettant d'appliquer le procédé de l'invention. Dans cet exemple, une première image 13 montre une scène de route comportant une portion de route face au véhicule, longée par des bas cotés et des arbres. On choisit, sur cette image 13, un premier point caractéristique P3 sur la gauche de la première image. On localise la position de ce point P3 dans l'image. On choisit, ensuite, un second point caractéristique P4 sur la droite de l'image 13 et on le localise. On recherche ensuite, dans la seconde image I4, les points caractéristiques P3 et P4. Lorsque ces deux points ont été trouvés, on les localise afin de connaître leurs coordonnées dans la seconde image I4. On détermine alors un premier vecteur vitesse V1 qui correspond au déplacement du premier point P3 entre l'image I3 et l'image I4. On détermine, de la même façon, un second vecteur vitesse V2 qui correspond au déplacement du second point entre l'image 13 et l'image 14. On calcule V1-V2. Dans cet exemple, V1-V2 est égal à 0. Autrement dit, le vecteur V1 et le vecteur V2 sont identiques. On en déduit que la route est une ligne droite ; elle ne présente pas de virage.

Il est à noter qu'un intervalle de sécurité peut être choisi autour de 0 pour offrir un certain de degré de confiance au procédé. En effet, si V1-V2 est proche de 0 sans être tout à fait nul, c'est-à-dire si V1-V2 est dans un intervalle prédéterminé entourant 0, alors on considère que la route est rectiligne.

Dans le procédé tel que décrit précédemment, un virage est déterminé par comparaison de deux images. Il est à noter toutefois que plusieurs images peuvent être réalisées et traitées pour obtenir un degré de confiance plus élevé dans la détermination des vecteurs vitesse. Dans ce cas, le nombre de calculs sera plus élevé, ce qui a pour effet de diminuer la vitesse du traitement vidéo.

L'invention propose également un procédé pour commander le niveau d'éclairage des projecteurs d'un véhicule lorsqu'un virage a été détecté. Lorsqu'un virage a été détecté par l'unité de traitement vidéo, conformément au procédé décrit précédemment, alors le sens et l'amplitude du virage sont connus. Ces informations (sens et amplitude) peuvent alors être envoyées à l'unité de gestion de l'éclairage afin d'agir sur le niveau d'éclairage des projecteurs. On entend par niveau d'éclairage, la quantité de lumière dirigée vers le virage. L'unité de gestion de l'éclairage est alors apte à commander l'orientation des projecteurs ou l'intensité d'éclairage de ces projecteurs, selon le type de projecteurs montés sur le véhicule. En effet, certains projecteurs se déplacent mécaniquement à l'intérieur d'un boîtier, orientant ainsi l'éclairage vers la droite ou vers la gauche en fonction de la commande reçue. D'autres projecteurs sont des projecteurs statiques, c'est-à-dire qu'ils sont immobiles dans le boîtier ; c'est l'intensité de l'éclairage qui est modulée pour éclairer plus ou moins sur la droite ou sur la gauche.

Dans le mode de réalisation préféré de l'invention, les projecteurs sont des projecteurs statiques, par exemple à diodes électroluminescentes, dont le niveau d'éclairage est modulé en modifiant la tension aux bornes de ces projecteurs. Ainsi, en fonction des informations de virage déterminées, la tension aux bornes des projecteurs est modifiée ce qui permet de faire varier l'intensité des diodes des projecteurs pour contrôler l'éclairage vers la droite ou vers la gauche afin que la lumière émise soit proportionnelle au virage.

On peut également prévoir que le kit de vision de nuit ou de détection des lignes blanches comporte des projecteurs incluant une fonction antibrouillard pouvant être utilisée pour une fonction fixe d'éclairage en virage.

Il est à noter que le niveau d'éclairage des projecteurs, en fonction du virage détecté, est régi par une loi connue dans le domaine de l'éclairage des véhicules et, par conséquent, pas décrite ici.

Comme expliqué précédemment, le procédé de l'invention peut être mis en oeuvre par un système réalisé initialement pour la vision de nuit ou le suivi de lignes blanches. La fonction de détection de virage (Bending Light, en termes anglo-saxons) selon l'invention est, de ce fait, peu coûteuse lorsqu'elle est installée sur un système de vision de nuit ou de détection de ligne blanche. Seules les capacités de l'unité de traitement vidéo doivent être augmentées pour permettre la détermination des vecteurs vitesse V1 et V2 sans ralentir le système de vision de nuit.

## Revendications

1. Procédé de détection d'un virage depuis un véhicule, comportant une étape de prise d'une première image (I1) d'une scène de route se déroulant à l'avant du véhicule, **caractérisé en ce qu'**il comporte les étapes suivantes :
- prise d'une seconde image (12) de la scène de route, successive à la première image,
- détermination d'un premier vecteur vitesse (V1) correspondant à un déplacement d'un premier point (P1) de la première image vers la seconde image,
- détermination d'un second vecteur vitesse (V2) correspondant à un déplacement d'un second point (P2) de la première image vers la seconde image,
- comparaison entre le premier vecteur vitesse et le second vecteur vitesse et obtention d'un résultat de comparaison,
- déduction de l'existence d'un virage et d'un sens de ce virage en fonction du résultat de comparaison.

2. Procédé selon la revendication 1, **caractérisé en ce que** la détermination du premier vecteur vitesse (V1) comporte :
- une recherche et une localisation, dans la première image (11), d'un premier point caractéristique (P1),
- une recherche et une localisation de ce premier point caractéristique (P1), dans la seconde image (I2), et
- une détermination du déplacement du premier point caractéristique (P1) entre la première et la seconde images.

3. Procédé selon la revendication 1 ou 2, **caractérisé en ce que** la détermination du second vecteur vitesse (V2) comporte :
- une recherche et une localisation, dans la première image (I1), d'un second point caractéristique (P2),
- une recherche et une localisation de ce second point caractéristique (P2), dans la seconde image (12), et
- une détermination du déplacement du second point caractéristique entre la première et la seconde images.

4. Procédé selon l'une quelconque des revendications 1 à 3, **caractérisé en ce que** le premier et le second points caractéristiques sont recherchés dans des zones latérales des images.

5. Procédé selon la revendication 4, **caractérisé en ce que** le premier point caractéristique est recherché sur la gauche de l'image et le second point caractéristique est recherché sur la droite de l'image.

6. Procédé selon la revendication 5, **caractérisé en ce que** la comparaison entre le premier et le second vecteurs vitesse comporte une opération de soustraction V1 - V2, un résultat positif de cette opération indiquant un virage à droite, un résultat négatif de cette opération indiquant un virage à gauche.

7. Procédé de commande d'une intensité d'éclairage d'un ensemble de projecteurs d'un véhicule, **caractérisé en ce qu'**il comporte les étapes suivantes :
- détermination d'un sens d'un virage selon l'une quelconque des revendications précédentes,
- détermination d'une amplitude du virage à partir d'un résultat de comparaison (V1 - V2) des deux vecteurs vitesse (V1, V2),
- application d'une tension de commande d'une fonction virage aux bornes des projecteurs en fonction du sens et de l'amplitude du virage.

8. Système de détection d'un virage pour véhicule automobile, **caractérisé en ce qu'**il comporte un kit de vision de nuit ou de détection de lignes blanches, comprenant :
- au moins une source infra rouge (3) pour éclairer une scène de route située à l'avant du véhicule,
- une caméra (1) de prise d'images de la scène de route, et
- un dispositif de commande (2) pour appliquer, à des projecteurs du véhicule, une intensité lumineuse fonction d'une analyse des images (11, 12) de la scène de route, ce dispositif de commande déterminant, à partir des images de la scène de route, un sens et une amplitude du virage, en mettant en oeuvre le procédé selon l'une quelconque des revendications 1 à 6.

9. Système selon la revendication 8, **caractérisé en ce que** le kit de vision de nuit ou de détection de lignes blanches comporte des projecteurs (3a, 3b) intégrant au moins une source infrarouge ou des projecteurs incluant une fonction antibrouillard pouvant être utilisée pour une fonction fixe d'éclairage en virage.

10. Système selon la revendication 9, **caractérisé en ce que** les sources infrarouges sont des lampes à filaments ou des diodes électroluminescentes.

11. Véhicule comportant un ensemble de projecteurs lumineux, **caractérisé en ce qu'**il comporte un système selon l'une quelconque des revendications 8 à 10.
